# EUROPEAN PATENT APPLICATION

(11) **EP 4 549 379 A1**
(43) Date of publication of application: **07.05.2025**
(21) Application number: 23219701.2
(22) Date of filing: 22.12.2023
(51) Int. Cl.: C01B 25/37, C01B 25/45, C01G 49/00, H01M 4/04, H01M 4/136, H01M 4/1397, H01M 4/58, H01M 4/02, H01M 10/0525, H01M 4/62, H01M 4/587, H01M 4/36

(54) **CARBON-ENCAPSULATED LITHIUM MANGANESE IRON PHOSPHATE MATERIAL, AND PREPARATION METHOD AND USE THEREOF**

(30) Priority: 02.11.2023 CN 202311462356
(71) Applicant: HUBEI RT ADVANCED MATERIALS GROUP COMPANY LIMITED, Daye City Huangshi, Hubei 435100 (CN)
(72) Inventor: Sun, Jie, Huangshi, 435100 (CN); Xia, Yaping, Huangshi, 435100 (CN); Cheng, Guangchun, Huangshi, 435100 (CN); Zhu, Manling, Huangshi, 435100 (CN); Wang, Kai, Huangshi, 435100 (CN); He, Zhonglin, Huangshi, 435100 (CN); He, Jianhao, Huangshi, 435100 (CN)
(74) Representative: Cleanthous, Marinos

(57) **Abstract**

The present disclosure provides a carbon-encapsulated lithium manganese iron phosphate material having a composition of: LiFe_{1-x-y}MnₓM_{y}PO₄@C, where M includes at least one of Mg, V, Zr, Nb, In, Al, Co and Ni, 0.5 ≤ x ≤ 0.8, 0 < y ≤ 0.02, and C is encapsulated carbon. The material has a secondary gradation structure with tightly bound material gradation, high compaction density, and excellent electrochemical performance. The present disclosure further provides a method for preparing a carbon-encapsulated lithium manganese iron phosphate material, which has a simple process flow and is suitable for application in large-scale industrial production. The present disclosure further provides a lithium ion battery in which the carbon-encapsulated lithium manganese iron phosphate material is applied.

## Description

### TECHNICAL FIELD

The present disclosure relates to the field of battery technology, and More particularly to a carbon-encapsulated lithium manganese iron phosphate material, and a preparation method and use thereof.

### BACKGROUND

The commercialization of lithium-ion batteries, which serve as current representative of secondary batteries with the best comprehensive performance, can be traced back to the 1990s. After many years of research, a carbon-encapsulated lithium manganese iron phosphate material has become a technical route with better performance in the field of lithium-ion batteries.

Conventional methods for preparing lithium manganese iron phosphate and precursors thereof include a high-temperature solid phase method, a sol-gel method and a co-precipitation method, etc. When a conventional and individual preparation method is adopted, the prepared precursor or carbon-encapsulated lithium manganese iron phosphate material has relatively low compaction density, resulting in low electrochemical specific capacity applied to a positive electrode material and a corresponding battery, which cannot meet the needs of high-performance applications.

A currently known scheme adopts a secondary gradation manner for precursors to prepare carbon-encapsulated lithium iron manganese phosphate materials. However, a grinding process is added into this scheme to prepare particle precursors of different particle sizes, which increases the complexity of the process and cannot ensure the elemental uniformity of the material. In fact it is still cannot actually obtain a carbon-encapsulated lithium manganese iron phosphate material that meets the high performance requirements.

### SUMMARY

In view of the above, the present disclosure is intended to solve at least one of the technical problems existed in the prior art. To this end, the present disclosure proposes a carbon-encapsulated lithium manganese iron phosphate material, a preparation method thereof and a lithium-ion battery. Through the carbon-encapsulated lithium manganese iron phosphate material and preparation method thereof provided by the present disclosure, a dense and uniform carbon-encapsulated layer with a stable grading structure, and high uniformity in element distribution of lithium manganese iron phosphate and metal doping, is obtained, and the electrochemical performance of the material can be improved preferably. At the same time, the method for preparing the carbon-encapsulated lithium manganese iron phosphate material has a simple process flow and is suitable for application in large-scale industrial production.

To this end, in a first aspect, an embodiment of the present disclosure provides a carbon-encapsulated lithium manganese iron phosphate material, having a composition of: LiFe_{1-x-y}MnₓM_{y}PO₄@C, where M includes at least one of Mg, V, Zr, Nb, In, Al, Co and Ni, 0.5 ≤ x ≤ 0.8, 0 < y ≤ 0.02, and C is encapsulated carbon.

In a second aspect, an embodiment of the present disclosure further provide a method for preparing a carbon-encapsulated lithium manganese iron phosphate material, so as to prepare the lithium manganese iron phosphate material described in the first aspect. The preparation method includes:
S10. mixing and dissolving an iron source, a manganese source, phosphoric acid and deionized water according to a certain proportion, preparing a ferromanganese phosphate precursor by a liquid phase coprecipitation method, respectively placing the ferromanganese phosphate precursor in an inert atmosphere for first sintering, and removing crystallization water to obtain an anhydrous ferromanganese phosphate precursor;
S20. taking and mixing two groups of the anhydrous ferromanganese phosphate precursors, lithium phosphate, a carbon source, a dopant and deionized water according to a certain proportion, stirring and dispersing, and subjecting to wet grinding, spray drying and second sintering to obtain two groups of carbon-encapsulated lithium manganese iron phosphate intermediates; wherein the first group is sintered at a first temperature and the second group is sintered at a second temperature different from the first temperature; and
S30. mixing the two groups of carbon-encapsulated lithium manganese iron phosphate intermediates, a carbon source, a dopant and deionized water according to a certain proportion, stirring and dispersing, and subjecting to wet grinding, spray drying and third sintering to obtain the carbon-encapsulated lithium manganese iron phosphate material.

Preferably, the first temperature is 400°C-500°C, the second temperature is 670°C-760°C, and a sintering time is 4 h-6 h.

Preferably, the manganese source includes at least one of manganese sulfate, manganese chloride, manganese oxalate, and manganese acetate; and/or

Preferably, the iron source includes at least one of ferrous sulfate, ferrous chloride, ferrous oxalate, and ferrous acetate.

Preferably, a molar ratio of iron and manganese to (Fe + Mn)/P of the is 1.45-1.465, and a molar ratio of lithium to iron and manganese Li/(Fe + Mn) is 1.02-1.05.

Preferably, the carbon source includes at least one of glucose, polyethylene glycol, citric acid, and modified graphite, and a mass ratio of the added amount of the carbon source accounts for 1.5wt%-2.0wt% of the carbon-encapsulated lithium manganese iron phosphate material as a preparation target; and/or
the dopant includes a compound of at least one of Mg, V, Zr, Nb, In, Al, Co and Ni.

Preferably, a mixing ratio of the two groups of carbon-encapsulated lithium manganese iron phosphate intermediates is (1-9):(9-1).

Preferably, in the wet grinding, a particle size D50 is controlled to be 0.3 µm-0.6 µm; and/or
an air inlet temperature of the spray drying is 220°C-280°C, and an air outlet temperature is 90°C-110°C; and/or
the third sintering has a sintering temperature of 700°C-800°C and a sintering time of 6 h-12 h.

In a third aspect, an embodiment of the present disclosure further provides a carbon-encapsulated lithium manganese iron phosphate material prepared by the preparation method of the second aspect.

In a fourth aspect, an embodiment of the present disclosure further provides a lithium-ion battery, including: a positive electrode of the battery prepared from the carbon-encapsulated lithium manganese iron phosphate material of the first aspect or the third aspect.

For the carbon-encapsulated lithium manganese iron phosphate material and a preparation method thereof provided by the embodiments of the present disclosure, different sintering temperatures are used in the sintering process for preparing the doped carbon-encapsulated lithium manganese iron phosphate intermediate to form carbon-encapsulated lithium manganese iron phosphate intermediates with different morphologies. and then subjected to doped carbon-encapsulated sintering, so that carbon-encapsulated lithium manganese iron phosphate intermediates with different morphologies are graded and a dense and uniform carbon-encapsulated layer is further formed, the graded binding of different carbon-encapsulated lithium manganese iron phosphate intermediates is tight, and high compaction density is realized, thereby obtaining excellent electrochemical performance; and the lithium-ion battery further prepared by using the carbon-encapsulated lithium manganese iron phosphate material as the positive electrode material can also obtain excellent performance. At the same time, the preparation method has a simple process flow and low equipment requirements, and is suitable for application in large-scale industrial production.

### BRIEF DESCRIPTION OF THE DRAWINGS

FIG. 1 is an SEM image of a carbon-encapsulated lithium manganese iron phosphate material provided by an embodiment of the present disclosure;
FIG. 2 is a flow chart of a method for preparing the carbon-encapsulated lithium manganese iron phosphate material provided by an embodiment of the present disclosure;
FIG. 3 is an XRD spectrum of the carbon-encapsulated lithium manganese iron phosphate material prepared in Example 1 of the present disclosure; and
FIG. 4 is a charge and discharge performance curve of the carbon-encapsulated lithium manganese iron phosphate material prepared in Example 1 of the present disclosure.

### DETAILED DESCRIPTION OF THE EMBODIMENTS

Embodiments of the present disclosure will be described in detail hereinafter, examples of which are illustrated in the accompanying drawings, wherein the same or similar reference numerals indicate the same or similar elements or elements having the same or similar functions throughout. The embodiments described below with reference to the accompanying drawings are exemplary and are intended to explain the present disclosure, but not to be construed as limitations to the present disclosure.

The disclosure hereafter provides many different embodiments or examples for implementing different structures of the present disclosure. To simplify the disclosure of the present disclosure, components and arrangements of specific examples are described hereafter. Of course, they are only examples and are not intended to limit the present disclosure. Furthermore, in the present disclosure reference numbers and/or letters can be repeated in different examples. Such repetition is for the purpose of simplicity and clarity, and does not in itself indicate the relationship between the various embodiments and/or arrangements as discussed. Moreover, various specific process and material examples are provided by the present disclosure, but those of ordinary skills in the art can recognize the applicability of other processes and/or the use of other materials.

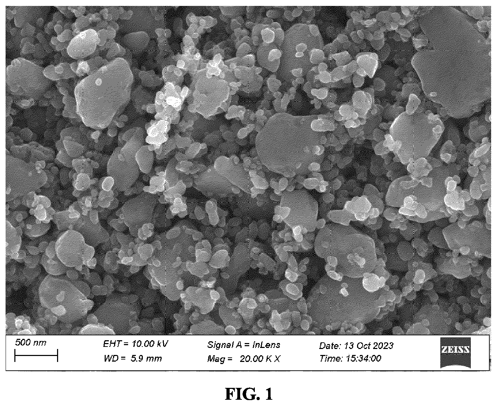

Please refer to FIG. 1. In a first aspect, an embodiment of the present disclosure provides a carbon-encapsulated lithium manganese iron phosphate material, having a composition of: LiFe_{1-x-y}MnₓM_{y}PO₄@C, where M includes at least one of Mg, V, Zr, Nb, In, Al, Co and Ni, 0.5 ≤ x ≤ 0.8, 0 < y ≤ 0.02, and C is encapsulated carbon. In this embodiment, the carbon-encapsulated lithium manganese iron phosphate material includes graded material particles with a first particle size and with a second particle size. The particle gaps are small, the gradation binding is tight, and the material compaction density is greater than or equal to 2.4 g/cm³.

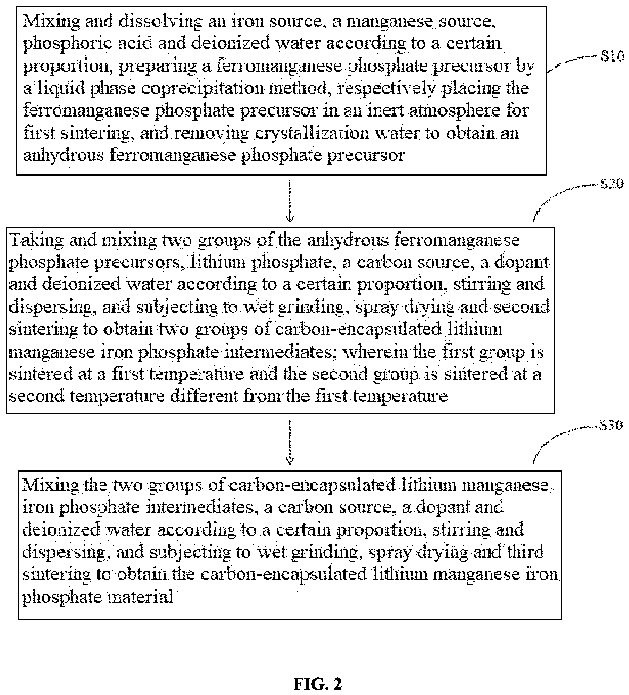

Please refer to FIG. 2. In a second aspect, an embodiment of the present disclosure further provide a method for preparing a carbon-encapsulated lithium manganese iron phosphate material, so as to prepare the lithium manganese iron phosphate material described in the first aspect. The preparation method includes:
S10. mixing and dissolving an iron source, a manganese source, phosphoric acid and deionized water according to a certain proportion, preparing a ferromanganese phosphate precursor by a liquid phase coprecipitation method, respectively placing the ferromanganese phosphate precursor in an inert atmosphere for first sintering, and removing crystallization water to obtain an anhydrous ferromanganese phosphate precursor;
S20. taking and mixing two groups of the anhydrous ferromanganese phosphate precursors, lithium phosphate, a carbon source, a dopant and deionized water according to a certain proportion, stirring and dispersing, and subjecting to wet grinding, spray drying and second sintering to obtain two groups of carbon-encapsulated lithium manganese iron phosphate intermediates; wherein the first group is sintered at a first temperature and the second group is sintered at a second temperature different from the first temperature; and
S30. mixing the two groups of carbon-encapsulated lithium manganese iron phosphate intermediates, a carbon source, a dopant and deionized water according to a certain proportion, stirring and dispersing, and subjecting to wet grinding, spray drying and third sintering to obtain the carbon-encapsulated lithium manganese iron phosphate material.

Further, the first temperature is 400°C-500°C, the second temperature is 670°C-760°C, and a sintering time is 4 h-6 h.

Further, the manganese source includes at least one of manganese sulfate, manganese chloride, manganese oxalate, and manganese acetate.

Further, the iron source includes at least one of ferrous sulfate, ferrous chloride, ferrous oxalate, and ferrous acetate.

Further, a molar ratio of iron and manganese to (Fe + Mn)/P of the is 1.45-1.465, and a molar ratio of lithium to iron and manganese Li/(Fe + Mn) is 1.02-1.05.

Further, the carbon source includes at least one of glucose, polyethylene glycol, citric acid, and modified graphite, and a mass ratio of the added amount of the carbon source accounts for 1.5wt%-2.0wt% of the carbon-encapsulated lithium manganese iron phosphate material as a preparation target.

Further, the dopant includes a compound of at least one of Mg, V, Zr, Nb, In, Al, Co and Ni.

Further, a mixing ratio of the two groups of carbon-encapsulated lithium manganese iron phosphate intermediates is (1-9):(9-1).

Further, in the wet grinding, the particle size D50 is controlled to be 0.3 µm-0.6 µm.

Further, the spray drying has an air inlet temperature of 220°C-280°C, and an air outlet temperature of 90°C-110°C.

Further, the third sintering has a sintering temperature of 700°C-800°C and a sintering time of 6 h-12 h.

In a third aspect, an embodiment of the present disclosure further provides a carbon-encapsulated lithium manganese iron phosphate material prepared by the preparation method of the second aspect.

In a fourth aspect, an embodiment of the present disclosure further provides a lithium-ion battery, including: a positive electrode of the battery prepared from the carbon-encapsulated lithium manganese iron phosphate material of the first aspect or the third aspect.

In the embodiments of the present disclosure, a co-precipitation method is adopted to synthesize a precursor of ferromanganese source. The reaction conditions are easy to control during the reaction process, which effectively improves the phase uniformity of the material and the material has good material repeatability.

In the embodiments of the present disclosure, a lithium manganese iron phosphate/carbon composite positive electrode material is prepared by co-precipitation and three-step sintering synthesis. By controlling a primary sintering temperature and the mass ratio of a primary sintering material at different primary sintering temperatures, and adjusting the gradation size between particles, the compaction density of the material can be improved to more than 2.4 g/cm³.

Embodiments of the present disclosure adopt a two-step carbon encapsulation and ion doping method, which is beneficial to the migration of electrons and ions, thereby improving the charge and discharge performance of the battery.

The specific process and effect of adopting the method for preparing the carbon-encapsulated lithium manganese iron phosphate material of the present disclosure will be further described in detail below in conjunction with some specific examples, but it is not intended to limit the claimed scope of the present disclosure.

### Example 1

This example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0_{.6}Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 9.6 g of glucose, 9.6 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying with the air inlet temperature controlled to be 220°C and the air outlet temperature controlled to be 100°C, then subjected to primary sintering under N₂ atmosphere at sintering temperatures of 400°C and 720°C respectively for a sintering time of 6 h, and cooled to room temperature after the sintering was completed, so as to obtain materials subjected to primary sintering at different temperatures;
(4) 500 g of the material subjected to primary sintering at 720°C and 500 g of the material subjected to primary sintering at 400°C that were obtained in the step (3) were mixed with 47.5 g of glucose, 47.5 g of polyethylene glycol, 8 g of modified graphite, 15 g of magnesium acetate tetrahydrate and deionized water, with the solid content controlled to be 42%, and the mixture was first subjected to ball milling and dispersed for 30 min, and then transferred into a sand mill for grinding, with the final grinding particle size D50 controlled to be 0.5 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50: 0.8-1.1 µm, and D90 ≤ 12 µm, so as to obtain a carbon-encapsulated lithium manganese iron phosphate material with high compaction density.

FIG. 1 was an SEM image of the carbon-encapsulated lithium manganese iron phosphate material with high compaction density prepared in Example 1. As could be seen from FIG. 1 that the primary particles were distributed with different particle sizes in a particle size range of 11 nm-1,200 nm, and the primary particles were tightly connected therebetween.

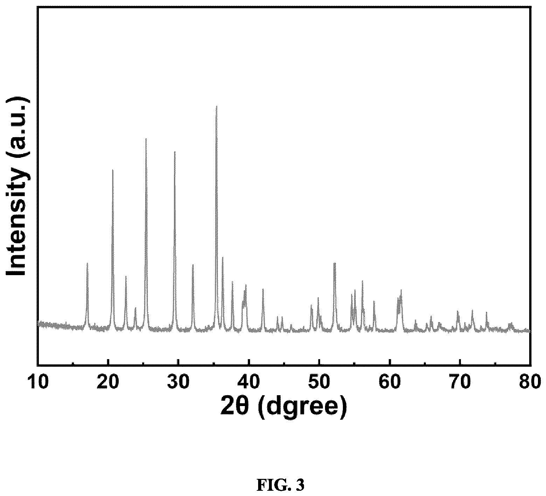

FIG. 3 was an XRD spectrum of the carbon-encapsulated lithium manganese iron phosphate material with high compaction density prepared in Example 1. As could be seen from FIG. 3, the peak position of the spectrum was consistent with a standard PDF card of lithium manganese iron phosphate, there was no impurity phase, and the material had high purity.

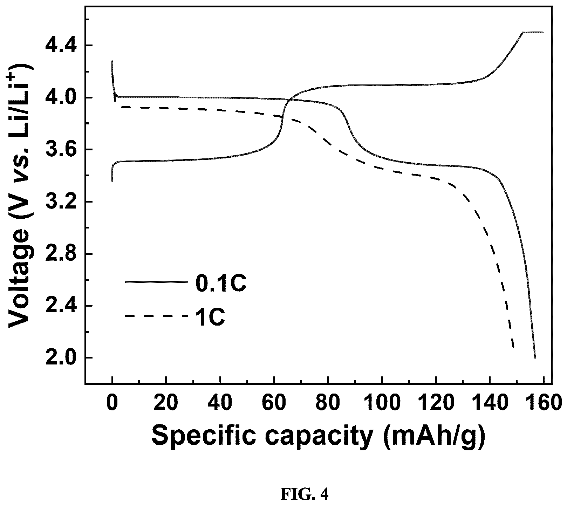

FIG. 4 was a curve graph showing the charge and discharge performance of the carbon-encapsulated lithium manganese iron phosphate material prepared in Example 1 under a voltage range of 2.5-4.5 V and a rate of 0.1 C. As could be seen from FIG. 4, the specific discharge capacity reached 156 mAh/g. Compared with Li⁺/Li, in this material two pairs of typical charge and discharge voltage platforms occurred at about 4.1 V and 3.5 V, which corresponded to the redox reactions of Mn³⁺/Mn²⁺ and Fe³⁺/Fe²⁺ respectively.

### Example 2

This example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0_{.6}Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 11.5 g of glucose, 11.5 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying with the air inlet temperature controlled to be 220°C and the air outlet temperature controlled to be 100°C, then subjected to primary sintering under N₂ atmosphere at sintering temperatures of 400°C and 740°C respectively for a sintering time of 6 h, and cooled to room temperature after the sintering was completed, so as to obtain materials subjected to primary sintering at different temperatures;
(4) 500 g of the material subjected to primary sintering at 740°C and 500 g of the material subjected to primary sintering at 400°C that were obtained in the step (3) were mixed with 47.5 g of glucose, 47.5 g of polyethylene glycol, 8 g of modified graphite, 15 g of magnesium acetate tetrahydrate and deionized water, with the solid content controlled to be 42%, and the mixture was first subjected to ball milling and dispersed for 30 min, and then transferred into a sand mill for grinding, with the final grinding particle size D50 controlled to be 0.5 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50 of 0.8 µm-1.1 µm, and D90 ≤ 12 µm, so as to obtain a carbon-encapsulated lithium manganese iron phosphate material with high compaction density.

### Example 3

This example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0_{.6}Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 11.5 g of glucose, 11.5 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying with the air inlet temperature controlled to be 220°C and the air outlet temperature controlled to be 100°C, then subjected to primary sintering under N₂ atmosphere at sintering temperatures of 400°C and 740°C respectively for a sintering time of 6 h, and cooled to room temperature after the sintering was completed, so as to obtain materials subjected to primary sintering at different temperatures;
(4) 500 g of the material subjected to primary sintering at 740°C and 500 g of the material subjected to primary sintering at 400°C that were obtained in the step (3) were mixed with 47.5 g of glucose, 47.5 g of polyethylene glycol, 8 g of modified graphite, 15 g of magnesium acetate tetrahydrate and deionized water, with the solid content controlled to be 42%, and the mixture was first subjected to ball milling and dispersed for 30 min, and then transferred into a sand mill for grinding, with the final grinding particle size D50 controlled to be 0.45 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50 of 0.8 µm-1.1 µm, and D90 ≤ 12 µm, so as to obtain a carbon-encapsulated lithium manganese iron phosphate material with high compaction density.

### Example 4

This example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0_{.6}Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 11.5 g of glucose, 11.5 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying with the air inlet temperature controlled to be 220°C and the air outlet temperature controlled to be 100°C, then subjected to primary sintering under N₂ atmosphere at sintering temperatures of 400°C and 740°C respectively for a sintering time of 6 h, and cooled to room temperature after the sintering was completed, so as to obtain materials subjected to primary sintering at different temperatures;
(4) 700 g of the material subjected to primary sintering at 740°C and 300 g of the material subjected to primary sintering at 400°C that were obtained in the step (3) were mixed with 47.5 g of glucose, 47.5 g of polyethylene glycol, 8 g of modified graphite, 15 g of magnesium acetate tetrahydrate and deionized water, with the solid content controlled to be 42%, and the mixture was first subjected to ball milling and dispersed for 30 min, and then transferred into a sand mill for grinding, with the final grinding particle size D50 controlled to be 0.45 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50 of 0.8 µm-1.1 µm, and D90 ≤ 12 µm, so as to obtain a carbon-encapsulated lithium manganese iron phosphate material with high compaction density.

### Comparative Example 1

This comparative example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0.₆Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 9.6 g of glucose, 9.6 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying, then subjected to primary sintering under N₂ atmosphere at a sintering temperature of 400°C for a sintering time of 6 h, and cooled to room temperature after the sintering was completed, so as to obtain materials subjected to primary sintering;
(4) 1,000 g of the material subjected to primary sintering at 400°C as obtained in the step (3) was mixed with 47.5 g of glucose, 47.5 g of polyethylene glycol, 8 g of modified graphite, 15 g of magnesium acetate tetrahydrate and deionized water, with the solid content controlled to be 42%, and the mixture was first subjected to ball milling and dispersed for 30 min, and then transferred into a sand mill for grinding, with the final grinding particle size D50 controlled to be 0.5 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50 of 0.8 µm-1.1 µm, and D90 ≤ 12 µm, so as to obtain a lithium iron manganese phosphate/carbon composite material with high compaction density.

### Comparative Example 2

This comparative example prepared a carbon-encapsulated lithium manganese iron phosphate material, which specifically included the following steps:
(1) ferrous sulfate, manganese sulfate, phosphoric acid and deionized water are mixed and dissolved, and subjected to a coprecipitation method to synthesize a ferromanganese phosphate precursor (Mn0.₆Fe_{0.4})₂(PO₄)₃·6H₂O, the ferromanganese phosphate precursor was sintered under N₂ atmosphere with the sintering temperature and time set at 525°C and 5 h, and then discharged when cooled to room temperature to obtain an anhydrous ferromanganese phosphate precursor;
(2) 754.5 g of the anhydrous ferromanganese phosphate precursor obtained in the step (1) was mixed with 252.9 g of lithium phosphate, 9.6 g of glucose, 9.6 g of polyethylene glycol, 9.6 g of citric acid, 4.8 g of ammonium metavanadate and deionized water, with the solid content controlled to be 45%, and the mixture was first subjected to ball milling and dispersed for 30 min, and then transferred into a sand mill for grinding, with the final grinding particle size D50 controlled to be 0.5 µm;
(3) the slurry obtained in the step (2) was subjected to spray drying, then subjected to primary sintering under N₂ atmosphere at a sintering temperature of 720°C for a sintering time of 6 h, and cooled to room temperature after the sintering was completed, so as to obtain a material subjected to primary sintering;
(4) 1,000 g of the material subjected to primary sintering at 720°C as obtained in the step (3) was mixed with 47.5 g of glucose, 47.5 g of polyethylene glycol, 8 g of modified graphite, 15 g of magnesium acetate tetrahydrate and deionized water, with the solid content controlled to be 45%, and the mixture was first subjected to ball milling and dispersed for 30 min, and then transferred into a sand mill for grinding, with the final grinding particle size D50 controlled to be 0.5 µm; and
(5) the slurry obtained in the step (4) was subjected to spray drying, subjected to primary sintering under N₂ atmosphere at a sintering temperature of 760°C for a sintering time of 10 h, cooled to room temperature after the sintering was completed, and pulverized by a jet mill with the particle size controlled to be D10 ≥ 0.30 µm, D50 of 0.8 µm-1.1 µm, and D90 ≤ 12 µm, so as to obtain a carbon-encapsulated lithium manganese iron phosphate material with high compaction density.

The difference between the Comparative Examples and Example 1 was that: the first sintering temperature controlled in the Comparative Examples was a single sintering temperature, and the primary sintering material with the single sintering temperature was adopted in the secondary grinding process.

The products obtained in Examples 1-4 and Comparative Examples 1-2 were further tested for the carbon content, powder compaction and specific discharge capacities at 0.1 C and 1 C, and the results were as shown in Table 1.

Testing Method: Referring to the national standard "Lithium iron phosphate-carbon composite cathode materials for lithium ion battery" GB/T 30835-2014, the relevant physical and chemical performance and electrochemical performance were tested, where a button battery was made (the mass ratio of an active material, a conductive agent and a binder was 90:5:5, and the charging and discharging voltage range was 2.0-4.5 V).

**Table 1 Electrochemical results**

| Serial number | Powder compacted density (g/cm³) | Carbon content (wt%) | Specific discharge capacity at 0.1 C (mAh/g) | Discharge specific capacity at 1 C (mAh/g) |
|---|---|---|---|---|
| Example 1 | 2.40 | 1.78 | 156.88 | 149.32 |
| Example 2 | 2.410 | 1.82 | 157.56 | 149.62 |
| Example 3 | 2.415 | 1.81 | 158.34 | 149.55 |
| Example 4 | 2.403 | 1.79 | 159.59 | 151.12 |
| Comparative Example 1 | 2.321 | 1.75 | 144.61 | 133.59 |
| Comparative Example 2 | 2.216 | 1.73 | 157.35 | 146.25 |

According to the aforementioned results, it can be seen that when the carbon content of the materials is basically the same, the primary particles with different particle sizes prepared through different first sintering temperatures in the embodiments of the present disclosure are mixed according to different mass ratios, and the compaction density and electrical performance of the powder of lithium manganese iron phosphate composite material obtained after secondary sintering are obviously higher than those of the carbon-encapsulated lithium manganese iron phosphate material prepared at the primary sintering temperature alone.

For the carbon-encapsulated lithium manganese iron phosphate material and a preparation method thereof provided by the embodiments of the present disclosure, different sintering temperatures are used in the sintering process for preparing the doped carbon-encapsulated lithium manganese iron phosphate intermediate to form carbon-encapsulated lithium manganese iron phosphate intermediates with different morphologies. and then subjected to doped carbon-encapsulated sintering, so that carbon-encapsulated lithium manganese iron phosphate intermediates with different morphologies are graded and a dense and uniform carbon-encapsulated layer is further formed, the graded binding of different carbon-encapsulated lithium manganese iron phosphate intermediates is tight, and high compaction density is realized, thereby obtaining excellent electrochemical performance; and the lithium-ion battery further prepared by using the carbon-encapsulated lithium manganese iron phosphate material as the positive electrode material can also obtain excellent performance. At the same time, the preparation method has a simple process flow and low equipment requirements, and is suitable for application in large-scale industrial production.

In the description of the specification, descriptions referring to the terms "one embodiment", "some embodiments", "an example", "a specific example" and "some examples" mean that specific features, structures, materials or characteristics described in connection with the embodiment or example are included in at least one embodiment or example of the present disclosure. In this specification, the schematic representation of the aforementioned terms are not necessarily aimed at the same embodiment or example. Moreover, the described specific features, structures, materials, or characteristics may be combined in any one or more embodiments or examples in a suitable manner. Moreover, different embodiments or examples and features of different embodiments or examples described in this specification can be joined and combined by those skilled in the art without contradicting each other.

Although embodiments of the present disclosure have been shown and described, it will be understood by those of ordinary skills in the art that various changes, modifications, substitutions and variations can be made to these embodiments without departing from the principle and spirit of the present disclosure, and the scope of the present disclosure is defined by the appended claims and the equivalents thereof.

## Claims

1. A carbon-encapsulated lithium manganese iron phosphate material, having a composition of LiFe_{1-x-y}MnₓM_{y}PO₄@C, wherein M comprises at least one of Mg, V, Zr, Nb, In, Al, Co and Ni, 0.5 ≤ x ≤ 0.8, 0 < y ≤ 0.02, and C is encapsulated carbon.

2. A method for preparing a carbon-encapsulated lithium manganese iron phosphate material, comprising:
S10. mixing and dissolving an iron source, a manganese source, phosphoric acid and deionized water according to a certain proportion, preparing a ferromanganese phosphate precursor by a liquid phase coprecipitation method, respectively placing the ferromanganese phosphate precursor in an inert atmosphere for first sintering, and removing crystallization water to obtain an anhydrous ferromanganese phosphate precursor;
S20. taking and mixing two groups of the anhydrous ferromanganese phosphate precursors, lithium phosphate, a carbon source, a dopant and deionized water according to a certain proportion, stirring and dispersing, and subjecting to wet grinding, spray drying and second sintering to obtain two groups of carbon-encapsulated lithium manganese iron phosphate intermediates; wherein the first group is sintered at a first temperature and the second group is sintered at a second temperature different from the first temperature; and
S30. mixing the two groups of carbon-encapsulated lithium manganese iron phosphate intermediates, a carbon source, a dopant and deionized water according to a certain proportion, stirring and dispersing, and subjecting to wet grinding, spray drying and third sintering to obtain the carbon-encapsulated lithium manganese iron phosphate material.

3. The method for preparing a carbon-encapsulated lithium manganese iron phosphate material according to claim 2, wherein the first temperature is 400°C-500°C, the second temperature is 670°C-760°C , and a sintering time is 4 h-6 h.

4. The method for preparing a carbon-encapsulated lithium manganese iron phosphate material according to claim 2, wherein the manganese source comprises at least one of manganese sulfate, manganese chloride, manganese oxalate, and manganese acetate; and/or
the iron source comprises at least one of ferrous sulfate, ferrous chloride, ferrous oxalate, and ferrous acetate.

5. The method for preparing a carbon-encapsulated lithium manganese iron phosphate material according to claim 2, wherein a molar ratio of iron and manganese to phosphorus (Fe + Mn)/P of the ferromanganese phosphate precursor is 1.45-1.465, and a molar ratio of lithium to iron and manganese Li/(Fe + Mn) is 1.02-1.05.

6. The method for preparing carbon-encapsulated lithium iron manganese phosphate material according to claim 2, wherein the carbon source comprises at least one of glucose, polyethylene glycol, citric acid, and modified graphite, and a mass ratio of the added amount of the carbon source accounts for 1.5wt%-2.0wt% of the carbon-encapsulated lithium manganese iron phosphate material as a preparation target; and/or
the dopant comprises a compound of at least one of Mg, V, Zr, Nb, In, Al, Co and Ni.

7. The method for preparing a carbon-encapsulated lithium manganese iron phosphate material according to claim 2, wherein a mixing ratio of the two groups of carbon-encapsulated lithium manganese iron phosphate intermediates is (1-9):(9-1).

8. The method for preparing a carbon-encapsulated lithium manganese iron phosphate material according to claim 2, wherein in the wet grinding, a particle size D50 is controlled to be 0.3 µm-0.6 µm; and/or
an air inlet temperature of the spray drying is 220°C-280°C, and an air outlet temperature is 90°C-110°C; and/or
the third sintering has a sintering temperature of 700°C-800°C and a sintering time of 6 h-12 h.

9. A carbon-encapsulated lithium manganese iron phosphate material prepared by the method for preparing a carbon-encapsulated lithium manganese iron phosphate material according to any one of claims 2-8.

10. A lithium-ion battery, comprising: a positive electrode of the battery prepared from the carbon-encapsulated lithium manganese iron phosphate material according to claim 1 or 9.
